# EUROPEAN PATENT SPECIFICATION

(11) **EP 1 184 621 B1**
(45) Date of publication and mention of the grant of the patent: **28.09.2005**
(21) Application number: 01303783.3
(22) Date of filing: 26.04.2001
(51) Int. Cl.: F23D 14/78, F23D 14/22

(54) **Gas only nozzle fuel tip and method for cooling the same**
Düse für Gasbrenner und Verfahren zum Kühlen derselben
Buse pour brûleur à gaz et procédé pour refroidir cette buse

(30) Priority: 31.08.2000 US 652176
(43) Date of publication of application: 06.03.2002
(73) Proprietor: GENERAL ELECTRIC COMPANY, Schenectady, NY 12345 (US)
(72) Inventor: Bechtel, William Theodore, II, Scotia, New York 12302 (US); Deleonardo, Guy Wayne, Scotia, New York 12302 (US); Fitts, David Orus, Ballston Spa, New York 12020 (US)
(74) Representative: Pedder, James Cuthbert

(56) References cited:
- EP-A- 0 548 908
- EP-A- 0 945 677
- US-A- 5 467 926
- US-A- 5 615 833
- US-A- 5 803 725

## Description

The invention relates to a fuel nozzle and more particularly to an end cap plate of a "Dual Fuel" nozzle design that has been configured for gas only use and to an adaptation for cooling the same.

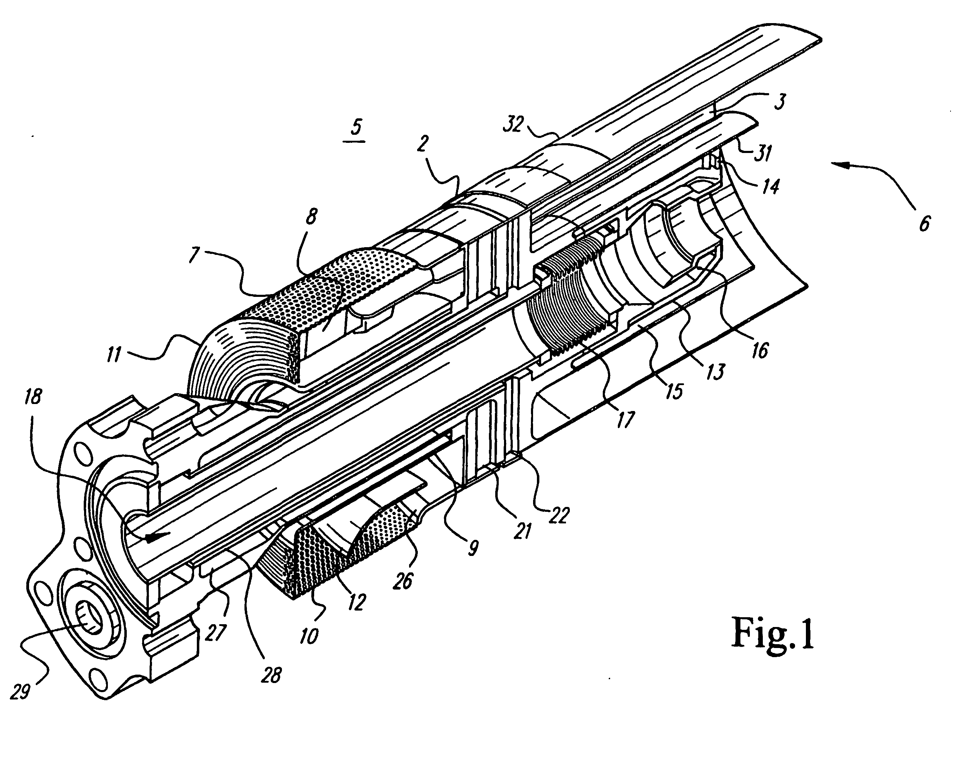

Gas turbines for power generation are generally available with fuel nozzles configured for either "Dual Fuel" or "Gas Only". "Gas Only" refers to operation burning, for example, natural gas and "Dual Fuel" refers to having the capability of operation burning either natural gas or liquid fuel. The dual fuel configuration is generally applied with oil used as a backup fuel, if natural gas is unavailable. The gas only configuration is offered in order to reduce costs as the nozzle parts and all associated equipment required for liquid fuel operation are not supplied. In general, fuel nozzles are designed to have dual fuel capability and the gas only version is a modification to the dual fuel design in which the dual fuel parts, which include the oil, atomizing air and water passages, are removed from the nozzle. The removal of these components exposes a cylindrical, open region along the axial center line of the nozzle to hot combustion gas. An example of a dual fuel nozzle modified to remove the dual (liquid) fuel parts is illustrated in FIGURE 1. This nozzle is disclosed in detail in copending Application No. 09/021,081, filed February 10, 1998.

FIGURE 1 is a cross-section through the burner assembly. The burner assembly is divided into four regions by function including an inlet flow conditioner 7, an air swirler assembly with natural gas fuel injection (referred to as a nozzle assembly) 2, an annular fuel air mixing passage 3, and a central diffusion flame natural gas fuel swozzle assembly 13.

Air enters the burner from a high pressure plenum 5, which surrounds the entire assembly except the discharge end, which enters the combustor reaction zone 6. Most of the air for combustion enters the premixer via the inlet flow conditioner (IFC) 7. The IFC includes an annular flow passage 8 that is bounded by a solid cylindrical inner wall 9 at the inside diameter, a perforated cylindrical outer wall 10 at the outside diameter, and a perforated end cap 11 at the upstream end. In the center of the flow passage 8 is one or more annular turning vanes 12. Premixer air enters the IFC 7 via the perforations in the end cap 11 and the cylindrical outer wall 10.

At the center of the burner assembly is a conventional diffusion flame fuel nozzle tip 13 having a slotted gas tip 14, which receives combustion air from an annular passage 15 and natural gas fuel through gas holes 16. The body of this fuel nozzle includes a bellows 17 to compensate for differential thermal expansions between this nozzle and the premixer. In the center of this diffusion flame fuel nozzle is a cavity 18, which, as noted above, receives the liquid fuel assembly to provide dual fuel capability. In the dual fuel configuration, during gas fuel operation, the oil, atomizing air and water passages in this region are purged with cool air to block hot gas from entering the passages when not in use. When the nozzle is configured for gas only operation, cavity 18 must be capped at the distal end of the nozzle to block hot combustion gas from entering the center, open region which may result in mechanical damage due to the high temperature. Since the end cap plate is exposed to hot combustion gas, it must be cooled.

In the past, cooling of the end cap plate used to cover the open region at the nozzle tip in a conversion from a dual fuel to a gas only configuration has been accomplished using the gas fuel as the cooling medium. More specifically, because removal of the dual fuel components eliminates the structure that formed the inner wall of the gas fuel passage, a part of the gas fuel can effuse through tiny holes in the end cap plate (not shown in FIGURE 1) to cool the same while the bulk of the fuel passes through the normal gas hole injectors 16 which are located between the air swirler vanes. This is a very simplified design for converting from a dual fuel to gas only nozzle. While generally effective, this approach is undesirable in view of the need to maintain low emissions over the gas turbine operating range. Diverting gas fuel for cooling from the desired injection points between the air swirler vanes and injecting that gas at a different location through tiny holes in an end cap plate (not shown in FIGURE 1) for cooling reduces the premixing of gas fuel and air which is essential for low emissions performance.

Another possible method for cooling the end cap plate is to use the cooling air supplied from the nozzle purge air system. The nozzle purge air system supplies air cooled so that its temperature does not exceed 399°C (750°F). As briefly described above with reference to purging the liquid fuel components during gas fuel operation, this air is generally applied to purging the gas fuel passages when not in use to resist the back-flow of hot combustion gas into the gas passages, manifolds and pipings. The limit of not exceeding an air temperature of 399°C (750°F) relates to the possible auto-ignition of gas fuel coming into contact with air exceeding that temperature. Since an end cap plate passage adapted to receive purge air for cooling rather than gas fuel would never have gas fuel present, it would be inefficient to use specially cooled air from the nozzle purge system to cool an end cap plate.

The existing fuel nozzle purge system does not have the capacity to supply the additional amount of air required for cooling the gas only nozzle end cap plate, nor would such a use of that specially cooled air be efficient.

It has been determined, however, that compressor discharge air would be an adequate cooling medium. Thus, a diffusion flame nozzle gas tip has been designed to allow for the use of compressor discharge air to cool the end cap plate. The appropriate amount of compressor discharge air is extracted from annular passage 15 into the central region 18 and is emitted through tiny (effusion) holes in the end cap plate to produce the desired cooling.

Thus, the invention concerns a gas only nozzle according to claim 1 and a method of cooling a gas only nozzle according to claim 7.

The invention will now be described in greater detail, by way of example, with reference to the drawings, in which:-
FIGURE 1 is an isometric view of a fuel nozzle with the liquid fuel parts removed from the center portion of the nozzle; and
FIGURE 2 is a cross-sectional view of a diffusion gas tip for a gas only nozzle that embodies the invention;

As described above, FIGURE 1 is an isometric view of a fuel nozzle with the liquid fuel parts removed from the center portion of the nozzle. With the liquid fuel parts of the dual fuel nozzle removed for the gas only configuration, the cavity must be closed at the distal end in order to preclude hot combustion gas from flowing into this region and to direct the gas fuel to and through the gas holes.

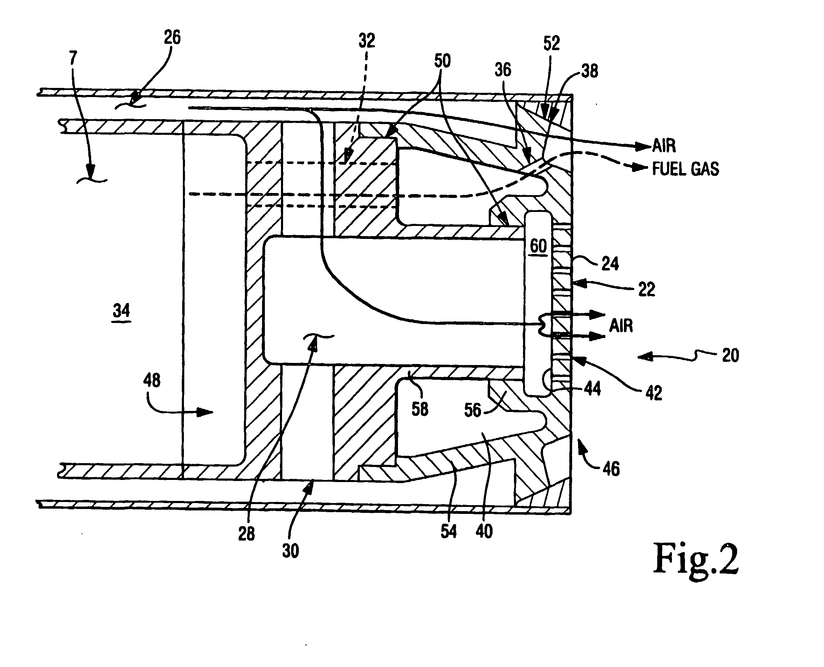

With reference to FIGURE 2, an embodiment of a diffusion gas tip 20 specifically for the gas only nozzle of the invention is shown. End cap plate 22 which closes the cavity formed by removal of the liquid fuel parts must be cooled because its distal surface 24 is exposed to hot combustion gas. To cool the end cap plate, compressor discharge air is diverted from annular channel 26, which feeds air through the diffusion air swirl vanes, and directed into a cavity 28 defined behind the end cap plate 22. In the illustrated embodiment, four circular, radial holes 30 transfer the compressor discharge air from annular outer passage 26 to inner cavity 28. Moreover, in the illustrated embodiment, these four radial cooling air transfer passages 30 are equally spaced circumferentially of the cavity 28 and are preferably equally spaced between the axial gas fuel passages 32 that transfer gas from the center nozzle cavity 34 to the gas injection holes 36 in the air swirl vanes 38. In the illustrated embodiment, an annular gas plenum 40 receives the gas from gas passages 32 for distribution to gas injection holes 36. The size of passages 30 and their orientation relative to the longitudinal axis of the nozzle may be varied as deemed necessary or desirable to determine the amount of compressor bleed air diverted toward cavity 28, it being understood, however, that the primary limiting factor with respect to cooling air flow would be the effusion openings 42 of the end cap plate 22, which will determine the volume of flow therethrough.

In the central air cavity 28, air received through passages 30 is directed to flow through small effusion holes 42 in the end cap plate 22, thereby cooling not only the proximal surface 44 of the end cap plate 22, but also to enhance the cooling of the entire plate structure. It is to be appreciated that the amount of compressor discharge air diverted for the end cap plate cooling represents only a very small percentage of that passing through the annular passage 26 that feeds the diffusion nozzle air swirl vanes 38.

In the illustrated embodiment, the nozzle tip is comprised of a tip part 46 and a flow diverter part 48. The diverter part 48 is secured to the tip part 46 as by brazed joints shown at 50. The tip part 46 is in turn brazed to the nozzle structure as at 52. The tip part 46 defines the end cap plate 22, the diffusion nozzle swirl vanes 38, an outer peripheral wall 54 of gas plenum 40, and a receiver 56 for receiving a cavity defining wall 58 of the diverter part 48. In the illustrated embodiment, the tip part 46 defines a distal portion 60 of the cavity 27. The flow diverter part 48 defines a remainder of the cavity 28, compressor bleed air diverting passages 30 for diverting air to cavity 28 for cooling the end cap plate 22 and the axial passages 32 for gas fuel flow from the center nozzle cavity 34 to and through the fuel injection holes 36.

As will be appreciated, the above described diffusion gas tip allows for the use of compressor discharge air to cool the end cap plate on the distal tip of the gas only fuel nozzle and replaces the use of either gas fuel or cooled air from the existing nozzle air purge system for this function. Also, the invention advantageously requires modification of only the diffusion tip sub-assembly to convert from a dual fuel to a gas only fuel nozzle design. The impact of this modification for the gas only nozzle would not be expected to substantially alter the gas fuel operational characteristics of the nozzle from the gas only mode of the dual fuel configuration.

## Claims

1. A gas only nozzle comprising:
an outer peripheral wall;
an air flow passage (26)defined within said outer wall and extending at least part circumferentially thereof;
a central gas fuel flow passage (34); and
a nozzle tip (20) fixed with respect to said outer peripheral wall at a distal end thereof for substantially blocking said central gas flow passage, said nozzle tip (20) including an end cap plate (22); said nozzle tip (20) defining at least one cooling air passage (30) ending in multiple holes (42) substantially clustered around the center of said plate (22) for diverting a portion of the air flowing through said air flow passage (30) to cool the nozzle end cap plate (22) thereof and **characterized in that**
said nozzle tip (20) defines at least one gas fuel passage (32) radially outside of said multiple holes (42) for directing gas fuel flowing through said central gas flow passage (34) to and through gas injection holes (38) defined about a periphery of said nozzle end cap plate (22).

2. A gas only nozzle as in claim 1, wherein said nozzle tip (20) includes a cavity defining structure disposed adjacent to a proximal surface of said nozzle end cap plate (22) for defining an air cavity (28) adjacent to said nozzle end cap plate (22), said cavity defining structure defining said at least one cooling air passage (30) and said at least one gas fuel passage (34).

3. A gas only nozzle as in claim 2, further comprising a wall disposed peripherally of said cavity defining structure and spaced therefrom to define a gas plenum (40) therebetween for receiving and distributing gas fuel flow flowing thereto through said at least one gas fuel passage (34).

4. A gas only nozzle as in claim 2, wherein said nozzle tip (20) is composed of a tip part (46) and a diverter part (48), said tip part (46) comprising said end cap plate (22) and said diverter part (48) comprising said cavity defining structure.

5. A gas only nozzle as in claim 4, wherein said tip part (46) and said diverter part (48) are brazed so as to be fixedly secured as an integrated unit.

6. A gas only nozzle as in claim 1, wherein said at least one gas fuel passage (32) extends in a direction generally parallel to a longitudinal axis of said nozzle and wherein said at least one cooling air passage (30) is oriented in a direction generally transverse to a longitudinal axis of said nozzle so as to extend generally radially with respect to said longitudinal axis.

7. A method of cooling a gas only nozzle fuel tip, comprising:
providing a gas only nozzle including an outer peripheral wall; an air flow passage (26) defined within said outer wall and extending at least part circumferentially thereof; and a central gas fuel flow passage (34); and
securing a nozzle tip (20) to said outer peripheral wall at a distal end thereof to substantially block said central gas flow passage (34), said nozzle tip (20) including an end cap plate (22); **characterised by**
diverting a portion of the air flowing through said air flow passage (26) to flow to and through said end cap plate (22) through multiple holes (42) clustered around the center of said plate (22) to cool the same; and
diverting gas fuel flowing through said central gas fuel flow passage (34) to flow to and through gas injection holes (38) defined about a periphery of said end cap plate (22) radially outside of said multiple holes (42).

8. A method as in claim 7, wherein the air flowing through the nozzle is compressor bleed air.

## Patentansprüche

1. Düse für reinen Gasbetrieb, zu der gehören:
eine äußere periphere Wand;
ein Luftstromkanal (26), der innerhalb der Außenwand definiert ist und der sich zumindest um einen Teil derselben herum erstreckt;
ein zentraler Gastreibstoffkanal (34); und
eine Düsenspitze (20), die bezüglich der äußeren peripheren Wand an einem distalen Ende derselben befestigt ist, um den zentralen Gasstromkanal im Wesentlichen zu sperren, wobei zu der Düsenspitze (20) eine Abschlussdeckelplatte (22) gehört; die Düsenspitze (20) wenigstens einen Kühlluftkanal (30) definiert, der in mehreren Öffnungen endet (42), die im Wesentlichen um die Mitte der Platte (22) gruppiert sind, um einen Teil der Luft abzulenken, die durch den Luftstromkanal (30) strömt, um dessen Düsenabschlussdeckelplatte (22) zu kühlen, **dadurch gekennzeichnet, dass**
die Düsenspitze (20) radial an der Außenseite der mehreren Öffnungen (42) wenigstens einen Gastreibstoffkanal (32) definiert, der dazu dient, zu und durch den zentralen Gasstromkanal (34) Gastreibstoff zu leiten, der durch Gasinjektionsöffnungen (38) strömt, die um einen Umfang der Düsenabschlussdeckelplatte (22) ausgebildet sind.

2. Düse für reinen Gasbetrieb nach Anspruch 1, bei der die Düsenspitze (20) eine einen Hohlraum definierende Struktur aufweist, die benachbart zu einer proximalen Fläche der Düsenabschlussdeckelplatte (22) angeordnet ist, um benachbart zu der Düsenabschlussdeckelplatte (22) einen Lufthohlraum (28) zu bilden, wobei die den Hohlraum definierende Struktur den wenigstens einen Kühlluftkanal (30) und den wenigstens einen Gastreibstoffkanal (34) definiert.

3. Düse für reinen Gasbetrieb nach Anspruch 2, ferner mit einer Wand, die peripher bezüglich der den Hohlraum definierenden Struktur angeordnet und von dieser beabstandet ist, um dazwischen eine Luftkammer (40) zu bilden, die dazu dient, einen durch den wenigstens einen Gastreibstoffkanal (34) dorthin strömenden Gastreibstoff aufzunehmen und zu verteilen.

4. Düse für reinen Gasbetrieb nach Anspruch 2, bei der zu der Düsenspitze (20) eine Spitzenkomponente (46) und eine Verteilerkomponente (48) gehören, wobei die Spitzenkomponente (46) die Abschlussdeckelplatte (22) aufweist und die Verteilerkomponente (48) die den Hohlraum definierende Struktur aufweist.

5. Düse für reinen Gasbetrieb nach Anspruch 4, bei der die Spitzenkomponente (46) und die Verteilerkomponente (48) hartgelötet sind, um als eine integrale Einheit starr gesichert zu sein.

6. Düse für reinen Gasbetrieb nach Anspruch 1, bei der der wenigstens eine Gastreibstoffkanal (32) sich in einer Richtung erstreckt, die im Allgemeinen parallel zu einer Längsachse der Düse verläuft, und bei der der wenigstens eine Kühlluftkanal (30) in einer Richtung ausgerichtet ist, die im Wesentlichen quer zu einer Längsachse der Düse verläuft, um sich bezüglich der Längsachse im Wesentlichen radial zu erstrecken.

7. Verfahren zum Kühlen einer Treibstoffspitze einer Düse für reinen Gasbetrieb, mit den Schritten:
Bereitstellen einer Düse für reinen Gasbetrieb, zu der gehören: eine äußere periphere Wand; ein Luftstromkanal (26), der innerhalb der Außenwand definiert ist und sich zumindest um einen Teil derselben erstreckt; und ein zentraler Gastreibstoffkanal (34); und
Sichern einer Düsenspitze (20) an der äußeren peripheren Wand an einem distalen Ende derselben, um den zentralen Gasstromkanal (34) im Wesentlichen zu sperren, wobei zu der Düsenspitze (20) eine Abschlussdeckelplatte (22) gehört;
**dadurch gekennzeichnet, dass**
ein Teil der durch den Luftstromkanal (26) strömenden Luft abgelenkt wird, um zu und durch die Abschlussdeckelplatte (22) durch mehrere Öffnungen (42) hindurch zu strömen, die um die Mitte der Platte (22) gruppiert sind, so dass diese gekühlt wird; und
ein durch den zentralen Gastreibstoffkanal (34) strömender Gastreibstoff abgelenkt wird, so dass dieser zu und durch Gasinjektionsöffnungen (38) strömt, die radial außerhalb der mehreren Öffnungen (42) um einen Umfang der Abschlussdeckelplatte (22) herum ausgebildet sind.

8. Verfahren nach Anspruch 7, bei dem die durch die Düse strömende Luft Verdichterablassluft ist.

## Revendications

1. Injecteur gaz seul, comprenant:
une paroi périphérique extérieure;
un passage d'air (26) formé à l'intérieur de ladite paroi extérieure et s'étendant sur au moins une partie de sa circonférence;
un passage de combustible gazeux central (34); et
une buse d'injecteur (20) fixée par rapport à ladite paroi périphérique extérieure à une extrémité distale de cette dernière pour obstruer substantiellement ledit passage de gaz central, ladite buse d'injecteur (20) comprenant une plaque d'extrémité (22); ladite buse d'injecteur (20) définissant au moins un passage d'air de refroidissement (30) se terminant par de multiples trous (42) sensiblement groupés autour du centre de ladite plaque (22) pour détourner une partie de l'air circulant dans ledit passage d'air (26) afin de refroidir la plaque d'extrémité (22) de l'injecteur et
**caractérisé en ce que**:
ladite buse d'injecteur (20) définit au moins un passage de combustible gazeux (32) situé radialement à l'extérieur desdits multiples trous (42) pour diriger du combustible gazeux circulant dans ledit passage de gaz central (34) jusqu'à et à travers des trous d'injection de gaz (38) formés autour d'une périphérie de ladite plaque d'extrémité (22) de l'injecteur.

2. Injecteur gaz seul selon la revendication 1, dans lequel ladite buse d'injecteur (20) comprend une structure formant cavité placée adjacente à une surface proximale de ladite plaque d'extrémité (22) de l'injecteur pour délimiter une cavité d'air (28) adjacente à ladite plaque d'extrémité (22) de l'injecteur, ladite structure formant cavité définissant ledit au moins un passage d'air de refroidissement (30) et ledit au moins un passage de combustible gazeux (32).

3. Injecteur gaz seul selon la revendication 2, comprenant en outre une paroi placée à la périphérie de ladite structure formant cavité et espacée de cette dernière afin de délimiter une chambre de tranquillisation de gaz (40) entre elles destinée à recevoir et distribuer un flux de combustible gazeux qu'elle reçoit via ledit au moins un passage de combustible gazeux (32).

4. Injecteur gaz seul selon la revendication 2, dans lequel ladite buse d'injecteur (20) est composée d'une partie nez (46) et d'une partie déflecteur (48), ladite partie nez (46) comprenant ladite plaque d'extrémité (22) et ladite partie déflecteur (48) comprenant ladite structure formant cavité.

5. Injecteur gaz seul selon la revendication 4, dans lequel ladite partie nez (46) et ladite partie déflecteur (48) sont brasées de manière à être assujetties fixement en une unité intégrée.

6. Injecteur gaz seul selon la revendication 1, dans lequel ledit au moins un passage de combustible gazeux (32) s'étend dans une direction globalement parallèle à un axe longitudinal dudit injecteur et dans lequel ledit au moins un passage d'air de refroidissement (30) est orienté dans une direction globalement transversale à un axe longitudinal dudit injecteur de manière à s'étendre globalement radialement par rapport audit axe longitudinal.

7. Procédé de refroidissement d'une buse d'injecteur gaz seul, comprenant les étapes consistant à:
fournir un injecteur gaz seul comprenant une paroi périphérique extérieure; un passage d'air (26) formé à l'intérieur de ladite paroi extérieure et s'étendant sur au moins une partie de sa circonférence; et un passage de combustible gazeux central (34); et
assujettir une buse d'injecteur (20) à ladite paroi périphérique extérieure au niveau d'une extrémité distale de cette dernière pour obstruer substantiellement ledit passage de gaz central (34), ladite buse d'injecteur (20) comprenant une plaque d'extrémité (22); **caractérisé par** le fait de
détourner une partie de l'air circulant dans ledit passage d'air (26) pour la faire circuler jusqu'à et à travers ladite plaque d'extrémité (22) par de multiples trous (42) groupés autour du centre de ladite plaque (22) afin de la refroidir; et
détourner du combustible gazeux circulant dans ledit passage de combustible gazeux central (34) pour le faire circuler jusqu'à et à travers des trous d'injection de gaz (38) formés autour d'une périphérie de ladite plaque d'extrémité (22) radialement à l'extérieur desdits multiples trous (42).

8. Procédé selon la revendication 7, dans lequel l'air circulant à travers l'injecteur est de l'air de prélèvement sur compresseur.
